# EUROPÄISCHE PATENTANMELDUNG

(11) **EP 2 423 382 A1**
(43) Veröffentlichungstag der Anmeldung: **29.02.2012**
(21) Anmeldenummer: 11174803.4
(22) Anmeldetag: 21.07.2011
(51) Int. Cl.: D21G 1/00, D21G 1/02, F16C 13/00

(54) **Vorrichtung und Verfahren zur Reduzierung von Schwingungen an einer Biegeeinstellwalze**

(30) Priorität: 26.08.2010 DE 102010039795
(71) Anmelder: Voith Patent GmbH, 89520 Heidenheim (DE)
(72) Erfinder: Niemann, Jochen, 47804 Krefeld (DE)

(57) **Zusammenfassung**

Die Erfindung betrifft eine Vorrichtung und ein Verfahren zur Reduzierung von Schwingungen an einer Biegeeinstellwalze (1) mit einem um eine feststehende Achse (4) rotierenden Mantel (6) sowie mit mindestens einem hydrostatischen Stützelement (5), wobei das Stützelement einen Druckraum (7) aufweist, der über eine Drossel (8) von einem Versorgungsraum (3) mit einem höheren Druckniveau als das im Druckraum (7) getrennt ist, sowie mit wenigstens einem Sensor (14) zur Ermittlung von Schwingungen des Stützelementes (5), des Mantels (6) oder der Achse (4). Zur Verminderung von Schwingungen ist vorgesehen, dass zwischen dem Versorgungsraum (3) und dem Druckraum (7) des Stützelementes (5) ein Bypass (9) vorgesehen ist, der wenigstens ein Schaltventil (10) aufweist.

## Beschreibung

Die Erfindung betrifft eine Vorrichtung zur Reduzierung von Schwingungen an einer Biegeeinstellwalze mit einem um eine feststehende Achse rotierenden Mantel sowie mit mindestens einem hydrostatischen Stützelement, wobei das Stützelement einen Druckraum aufweist, der über eine Drossel von einem Versorgungsraum mit einem höheren Druckniveau als das im Druckraum getrennt ist, sowie mit wenigstens einem Sensor zur Ermittlung von Schwingungen des Stützelementes, des Mantels oder der Achse.

Die Erfindung betrifft ferner ein Verfahren zur Reduzierung von Schwingungen an einer Biegeeinstellwalze mit einem um eine feststehende Achse rotierenden Mantel sowie mit mindestens einem hydrostatischen Stützelement, wobei das Stützelement einen Druckraum aufweist, der über eine Drossel von einem Versorgungsraum mit einem höheren Druckniveau als das im Druckraum getrennt ist, sowie mit wenigstens einem Sensor zur Ermittlung von Schwingungen des Stützelementes, des Mantels oder der Achse.

Eine weit verbreitete Anwendung finden derartige Walzen bei der Behandlung einer Papierbahn, die im Folgenden als Beispiel zur Erläuterung der Erfindung verwendet werden soll. Die gleiche Problematik ergibt sich aber auch bei anderen Materialbahnen.

In der Regel wirken sogenannte "weiche" Walzen mit "harten" Walzen, beispielsweise in Kalandern, zusammen. Vereinzelt wirken auch zwei "weiche" Walzen zusammen. Die weichen Walzen sind hierbei mit einem Kunststoffbelag bezogen. Man hat nun beobachtet, dass nach einer gewissen Betriebszeit derartiger Kalander ein sogenanntes Barring zu beobachten ist. Diese Barring-Erscheinung bewirkt einerseits ein unerwünschtes streifenförmiges Muster auf der Papierbahn. Man kann diese Streifen aber auch als streifenförmige Markierungen an den elastischen Walzen mit den Kunststoffbelägen erkennen. Die weichen Walzen werden sozusagen vieleckig. Ab einer gewissen Stärke oder Intensität führen diese Barrings zu Ausschuss bei der Papierbahn. Die entsprechende Walze oder die entsprechenden Walzen müssen dann überarbeitet werden, um die Verformung des Kunststoffbelages zu beseitigen. In der Regel ist dies mit einem Abdrehen der Walze verbunden.

Es ist der Einsatz einer Drossel zur Bedämpfung von Schwingungen im Zulaufstrom des Druckfluids zur hydraulischen Trennung von Druckraum und Rohrleitung aus der DE 38 02 234 A1 bekannt. Durch diese Maßnahme lässt sich das Rohrleitungssystem für die Zufuhr des Druckfluids grundsätzlich von dem Druckraum trennen und eine saubere Schwingungsdämpfung tatsächlich umsetzen, wie eigene Versuche im Jahre 2004 gezeigt haben. Damit erst besteht die Möglichkeit, Schwingungsenergie an einer Drosselstelle zu vernichten und den Walzenmantel über die steif angekoppelten Stützelemente zu bedämpfen. Die Stützelemente mit einem Durchmesser von in der Regel 30 bis 150 mm sind über den Druckfluidspalt zum Mantel hin mit einer Größenordnung von 20... 50 µm nämlich sehr steif an diesen angekoppelt. Messungen und Berechnungen zeigen, dass die Eigenfrequenz des Stützelementes über den Druckfluidspalt zum Walzenmantel bei ca. 1100 bis 1300Hz liegt.

Schließlich ist die DE 10 2007 051 395 A1 veröffentlicht, welche im Wesentlichen den Gedanken der WO 88/03610 auf eine Walze mit Stützelementen 1:1 überträgt. Dabei sind ein Blasenspeicher plus Drossel parallel geschaltet unterhalb des Stützelementes installiert.

Alle bislang vorgestellten Lösungen sind auf die passive Schwingungsdämpfung ausgelegt.

Zur Dämpfung oder zur aktiven Schwingungsunterdrückung im Bereich von 200 bis 1000 Hz in einer Walze ist das Patent DE 100 08 200 B4 bekannt. Bei dieser Erfindung möchte man vorzugsweise durch elektromagnetische Aktuatoren eine Gegenschwingung auf den Mantel ausüben, um die Schwingungen zu eliminieren. Walzen der dort beschriebenen Art sind prinzipiell in einfacher Anzahl oder in mehrfacher Anzahl in (Multinip-)Kalandern einsetzbar. Allerdings ist das Verfahren teuer und es bedarf eines erheblichen konstruktiven und fertigungs- sowie steuerungstechnischen Aufwandes.

Die Erfindung hat es sich zur Aufgabe gemacht, eine aktive, aber deutlich weniger aufwändige und preiswertere Möglichkeit zur Dämpfung von Schwingungen in einer Biegeeinstellwalze mit Stützelementen zu bieten.

Die Erfindung wird vorrichtungsmäßig gemäß Anspruch 1 dadurch gelöst, dass zwischen dem Versorgungsraum und dem Druckraum des Stützelementes ein Bypass vorgesehen ist, der wenigstens ein Schaltventil aufweist. Es soll entsprechend derart schaltbar sein, dass es den beispielsweise durch den Sensor gemessenen Schwingungen entgegenwirkt. Der Erfinder hat erkannt, dass man sich die Druckdifferenz vor zu hinter der Drossel zunutze machen kann, um hochfrequent (beispielsweise 100 bis 1000 Hz) Energie in Form von Druckkräften auf das Stützelement wirken lassen zu können. Diese Energie wird genutzt, um das Schwingungsverhalten der Walze aktiv zu dämpfen.

Analog kann man die Aufgabe der Erfindung durch ein Verfahren gemäß Anspruch 8 lösen, indem Schwingungen gemessen und anhand des Ergebnisses wenigstens ein Schaltventil in einem Bypass zwischen dem Versorgungsraum und dem Druckraum angesteuert werden.

Im Folgenden sei die Wirkungsweise der Erfindung näher beschrieben. Bei einem relativ zum Joch schwingenden Walzenmantel wird über das am Walzenmantel steif angekoppelte Stützelement Druckfluid über die Dämpfungsdrossel hin und her geschoben. Durch die in den Drosseln entstehende Reibung wird dem System Schwingungsenergie entzogen. Physikalisch stellt das zwischen Joch und Stützquelle eingespannte Druckfluidvolumen eine Reihenschaltung aus Feder, Masse und Dämpfer dar. Dabei wird die Federsteifigkeit durch die Kompressibilität des eingespannten Druckfluidvolumens definiert. Die Masse ist gleich der zu bewegenden Druckfluid-Masse, während sich der Dämpfer aus dem Strömungswiderstand der Vordrossel ergibt. Das jeweilige Dämpfungssystem muss so ausgelegt sein, dass in einem bestimmten Frequenzbereich der Strömungswiderstand möglichst hoch ist, aber dennoch genügend Druckfluid über die Drosselstelle pulsieren kann. Ist die Drossel zu eng, so verhält sich die zwischen Joch und Stützquelle eingespannte Druckfluidsäule überwiegend wie eine Feder. Ist sie zu weit, so ist der Strömungswiderstand klein und damit die Dämpfung gering. Untersuchungen zeigen, dass bei hohen Frequenzen sich das Druckfluid in Strömungsrichtung zur Stützquelle betrachtet vor der Drossel so träge verhält, dass wenig Druckfluid bzw. Druckfluid mit einer Volumenstromamplitude mit ungünstiger Phasenlage relativ zum schwingenden Walzenmantel über die Drosselstelle pulsiert bzw. schwingt. Eine optimale Drossel erreicht ihre Wirkung dann, wenn der Systemdruck möglichst konstant bleibt. Aufgrund dieser Überlegungen wird nun vorgeschlagen, die Druckdifferenz zu nutzen, welche vor der Drossel im Versorgungsraum zu dem im Druckraum der Stützquelle besteht.

Es hat sich durch Messungen im Betrieb gezeigt, dass sich die Barring-Tendenz verstärkt, wenn die Volumenstrompulsationen über die Drosselstelle bei der betrachteten Barring-Frequenz sehr klein wird. Dann zeigt das zwischen der Drossel und der Stützquelle eingespannte Druckfluidvolumen ein nahezu rein federndes Verhalten. Dieses Verhalten wird durch das gezielte "Einspritzen" aber auch durch das "Ablassen" von Druckfluid mit der Barring-Frequenz gezielt verbessert, so dass letztlich das dämpfende Verhalten der Drosselstelle deutlich stärker zum Tragen kommen kann und sich die Bewegung/Beschleunigung der Stützquelle und damit des Walzenmantels minimiert.

Um das System möglichst preiswert zu machen, ist es von Vorteil, wenn das Schaltventil ein diskret schaltbares Ventil darstellt. Bereits mit der hochfrequenten Umschaltung "Auf/Zu" als Reaktion auf das Schwingungsverhalten lassen sich deutliche Dämpfungen erzielen.

Alternativ ist es jedoch bevorzugt, dass das Schaltventil ein Stetigventil, vorzugsweise ein Regelventil, ist. Mit der Einstellbarkeit des kurzzeitigen Volumenstroms werden die Möglichkeiten zur Ansteuerbarkeit gegen die Schwingungen der Walze weiter erhöht.

Mit Vorteil weist der gesamte Bypass einen geringeren Strömungswiderstand auf als die Drossel. Auf diese Weise ist sichergestellt, dass immer ein höherer Druck zur hochfrequenten Beaufschlagungen des Druckraumes vorhanden ist.

Mit besonderem Vorteil ist vorgesehen, dass der Bypass mit einem Rückschlagventil versehen ist. In der Regel ist es zwischen dem Versorgungsraum und dem Druckspeicher angeordnet. Ein hydrostatisches Stützelement wird mit einem nahezu konstanten Druckfluid-Volumenstrom berechnet. Das Druckfluid fließt dabei von dem Versorgungsraum über die Drossel in den Druckraum und von dort durch Kapillaren in die Drucktaschen des Stützelementes, wo der Druckfluiddruck zur Schmierung des Mantels aufgebaut wird. Dort fließt ein teil über die Stege des Stützelementes in den Walzeninnenraum ab, so dass sich ein Druckfluidkissen bildet, das einem Materialverschleiß zwischen Stützelement und Mantel entgegenwirkt. Dieser konstant zufließende Volumenstrom wird durch die Schwingungen des Mantels und des Stützelementes aber auch schwanken. Über den Bypass und die geeignete Ansteuerung des Schaltventils können die Schwankungen des Volumenstroms vermindert werden, indem Druckfluid aus dem Versorgungsraum in hochfrequenten Stößen dem Druckraum zugeführt werden. Mit dem Rückschlagventil kann ein Rückfließen des Druckfluids in den Versorgungsraum vermieden werden, so dass auch dadurch die Schwingungen abgebaut werden.

Es ist günstig, wenn der Bypass mit einem Druckspeicher in Verbindung steht. So können eventuelle Druckschwankungen im Versorgungsraum wirkungsvoll kompensiert werden. Arbeitsdrücke im Druckspeicher von 5 bis 80 bar haben sich bewährt. Wegen des Druckspeichers ist auch sicher gestellt, dass immer ein ausreichender Druck vorhanden ist, um Druckfluid über das in der Regel druckmindernde Schaltventil in den Druckraum zu bringen.

Vorzugsweise ist eine elektronische Steuerung vorhanden, die jeweils einen Eingang für Drehzahl- und/oder Weg- und/oder Beschleunigungssignale des wenigstens einen Sensors besitzt. Anhand einer Auswertung der Messdaten kann dann die Ansteuerung des wenigstens einen Schaltventils geregelt werden. Hierbei ist bevorzugt, dass man eine aktuelle Schwingung am Stützelement oder am Walzenmantel ermittelt und die aktive Steuerung des Schaltventils in Abhängigkeit von der resultierenden Schwingung vornimmt. Man erzeugt also einen Regelkreis, der so ausgebildet ist, dass die resultierende Schwingung möglichst klein ist.

Verfahrensmäßig ist es bevorzugt, dass das Schaltventil mit einer Schaltfrequenz von 100 bis 2000 Hz, vorzugsweise 200 bis 1500 Hz, angesteuert wird. Innerhalb dieses Frequenzbereiches, der mit modernen Schaltventilen gerade noch bewältigt wird, ist eine Schwingungsdämpfung in Kalandern besonders wirkungsvoll.

Dabei ist es von Vorteil, wenn über das Schaltventil ein gemittelter Volumenstrom von 0,1 bis 4 l/min pulsiert. Ein solcher Volumenstrom bewältigt in der Regel die durch die Schwingungen des Stützelementes und die normale Druckfluidabfuhr über die hydrostatischen Taschen bewirkten Volumenänderung des Druckraumes unterhalb des Stützelementes.

Besonders bevorzugt ist es, wenn in einer elektronischen Steuerung Messergebnisse von Drehzahl- und/oder Weg- und/oder Beschleunigungssignalen des wenigstens einen Sensors analysiert werden und das Schaltventil aufgrund der Auswertung angesteuert wird. Dadurch erhält man den bereits beschriebenen wirkungsvollen Regelkreis, der dazu geeignet ist, die Schwingungen zu minimieren.

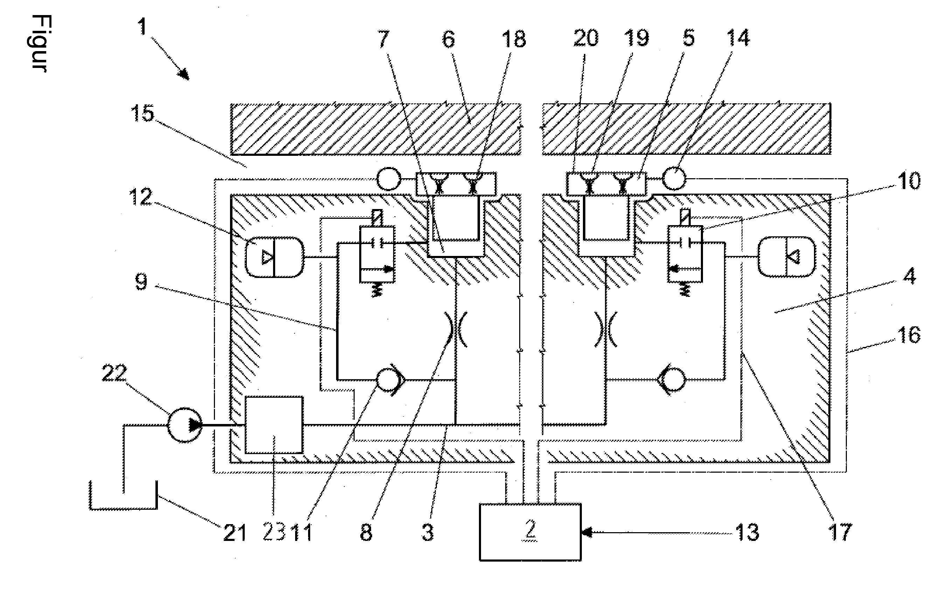

Die Erfindung wird im Folgenden anhand eines Ausführungsbeispiels unter Bezugnahme auf die Zeichnung näher erläutert. In dieser zeigt die einzige Figur eine schematische Darstellung einer Biegeeinstellwalze mit Stützelementen. Es sind zur besseren Veranschaulichung nur die beiden "Enden" der Walze symbolisiert, der mittlere Teil ist herausgeschnitten.

Die für einen Kalander vorgesehene Biegeeinstellwalze 1 besitzt in nicht dargestellter Weise, auf dem Mantel 6 eine elastische Oberfläche, die besonders anfällig für Barring-Markierungen ist, die sich aus Eigenschwingungen der Walze oder eines Walzensystems im Kalander ergeben. Die dazu gehörenden Erregerkräfte können viele Ursachen haben, beispielsweise Inhomogenitäten, Anisotropien oder Geometriefehler. Auch können Papierdickenschwankungen der den Kalander durchlaufenden Papierbahn die Walze oder den Walzenstapel erregen.

Der Mantel 6 rotiert um eine Achse 4 und wird über hydrostatische Stützelemente 5 abgestützt. Die Stützelemente könnten aber durchaus zusätzlich auch hydrodynamisch wirken. Die Stützelemente 5 sind wie ein Kolben in einem Zylinder innerhalb eines abgedichteten Druckraums 7 radial gegen den Walzenmantel 6 verschiebbar. Dazu wird der Druckraum mit Druckfluid versorgt, das seinen Weg aus einem Vorratstank 21 über eine Pumpe 22 und gegebenenfalls über eine Ventilstation 23 zu einem in der Achse 4 befindlichen Versorgungsraum 3 nimmt. Der Versorgungsraum 3 kann dabei durchaus als Leitung, Kanal oder Rohr ausgebildet sein.

Das Druckfluid nimmt seinen Weg vom Versorgungsraum 3 über eine später näher beschriebene Drossel 8 in den Druckraum 7. Dort baut es einerseits den Druck auf, mit dem das Stützelement 5 in Richtung Mantel 6 gedrückt wird. Ein kleiner Teil des Druckfluids fließt aber auch durch Kapillaren 18 im Stützelement in dessen Drucktaschen 19 und von dort über Stege 20 in den Walzeninnenraum 15. Zwischen den Stegen 20 und dem Walzenmantel 6 baut sich ein Schmierfilm gegen Verschleiß auf. Ohne äußere Einflüsse wäre der Volumenstrom des Druckfluids konstant. Durch die Schwingungen im Stützelement 5 kommt es jedoch auch zu Schwankungen im Volumenstrom.

Ein wichtiger Bestandteil einer Biegeeinstellwalze ist die Drossel 8, wenn die Schwingung der Walze bzw. der Stützelemente 5 gedämpft werden soll. Sie ist genau zwischen dem Druckraum 7 und dem Versorgungsraum 3 angeordnet. Mittels der Drossel 8 wird der fließenden Druckfluidsäule Energie entzogen. Es ist jedoch das Bestreben der Erfindung, diese Dämpfung weiter zu verbessern und wirkungsvoller regelbar zu machen.

Hierzu wird eine parallele Bypass-Verbindung 9 zwischen dem Versorgungsraum 3 vor der Drossel und dem Druckraum 7 des Stützelementes 5 geschaffen. In die Bypass-Verbindung 9 wird ein hochdynamisches Schaltventil 10 integriert, wobei das Schaltventil 10 mittels einer geeigneten Steuerung 2 über eine Steuerleitung 17 angesteuert wird. Die als Regler ausgeführte Steuerung 2 verarbeitet Informationen zur Beschleunigung des Stützelementes 5 und der Barring-Frequenz, indem zusätzlich zu den über einen Sensor 14 und die Steuerleitung 16 aufgenommenen Schwingungsmessdaten auch die Drehzahl der Walze 1 mit einem Drehzahltrigger 13 erfasst wird. Da sich nur ganzzahlige Vielfache der Drehfrequenz als Barring-Muster auf dem Walzenumfang abzeichnen, brauchen auch nur solche Frequenzen betrachtet werden. Das Schaltventil 10 wird jetzt so angesteuert, dass die Bewegung des Stützelementes 5 bei der Barring-Frequenz minimiert wird.

Das Schaltventil 10 in der Bypass-Leitung 9 kann ein diskret schaltbares Ventil oder ein Stetigventil, also beispielsweise ein Regelventil sein. So ist möglich zu den Druckänderungen im Druckraum 7 über eine Steuerkante des Schaltventils 10 mittlere Volumenströme in einer Größenordnung von 0,1 bis 4 l/min und mit einer Frequenz von z. B. 200 bis 1500 Hz pulsieren zu lassen. Dadurch werden die Schwingungen gedämpft.

Sinnvollerweise ist in dem Bypass 9 zusätzlich ein Druckspeicher 12, der mit 5 bis 80 bar vorgespannt ist, und ein Rückschlagventil 11 vorgesehen. Die Schwankungen des Druckfluid-Volumenstroms durch das Stützelement können damit auf dem Bypass-Weg deutlich vermindert werden.

### Bezugszeichenliste

- 1: Biegeeinstellwalze
- 2: Elektronische Steuerung
- 3: Versorgungsraum
- 4: Achse
- 5: Stützelement
- 6: Mantel
- 7: Druckraum
- 8: Drossel
- 9: Bypass
- 10: Schaltventil
- 11: Rückschlagventil
- 12: Druckspeicher
- 13: Drehzahltrigger
- 14: Sensor
- 15: Walzeninnenraum
- 16: Steuerleitung
- 17: Steuerleitung
- 18: Kapillare
- 19: Drucktasche
- 20: Stege
- 21: Vorratstank
- 22: Pumpe
- 23: Ventilstation

## Patentansprüche

1. Vorrichtung zur Reduzierung von Schwingungen an einer Biegeeinstellwalze (1) mit einem um eine feststehende Achse (4) rotierenden Mantel (6) sowie mit mindestens einem hydrostatischen Stützelement (5), wobei das Stützelement einen Druckraum (7) aufweist, der über eine Drossel (8) von einem Versorgungsraum (3) mit einem höheren Druckniveau als das im Druckraum (7) getrennt ist, sowie mit wenigstens einem Sensor (14) zur Ermittlung von Schwingungen des Stützelementes (5), des Mantels (6) oder der Achse (4), **dadurch gekennzeichnet, dass** zwischen dem Versorgungsraum (3) und dem Druckraum (7) des Stützelementes (5) ein Bypass (9) vorgesehen ist, der wenigstens ein Schaltventil (10) aufweist.

2. Vorrichtung gemäß Anspruch 1, **dadurch gekennzeichnet, dass** das Schaltventil (10) ein diskret schaltbares Ventil darstellt.

3. Vorrichtung gemäß Anspruch 1, **dadurch gekennzeichnet, dass** das Schaltventil (10) ein Stetigventil, vorzugsweise ein Regelventil, ist.

4. Vorrichtung gemäß einem der Ansprüche 1 bis 3, **dadurch gekennzeichnet, dass** der gesamte Bypass (9) einen geringeren Strömungswiderstand als die Drossel (8) aufweist.

5. Vorrichtung gemäß einem der Ansprüche 1 bis 4, **dadurch gekennzeichnet, dass** der Bypass (89) mit einem Rückschlagventil (11) versehen ist.

6. Vorrichtung gemäß einem der Ansprüche 1 bis 5, **dadurch gekennzeichnet, dass** der Bypass (9) mit einem Druckspeicher (12) in Verbindung steht.

7. Vorrichtung gemäß einem der Ansprüche 1 bis 6, **dadurch gekennzeichnet, dass** eine elektronische Steuerung (2) vorhanden ist, die jeweils einen Eingang für Drehzahl- und/oder Weg- und/oder Beschleunigungssignale des wenigstens einen Sensors (14) besitzt.

8. Verfahren zur Reduzierung von Schwingungen an einer Biegeeinstellwalze (1) mit einem um eine feststehende Achse (4) rotierenden Mantel (6) sowie mit mindestens einem hydrostatischen Stützelement (5), wobei das Stützelement einen Druckraum (7) aufweist, der über eine Drossel (8) von einem Versorgungsraum (3) mit einem höheren Druckniveau als das im Druckraum (7) getrennt ist, sowie mit wenigstens einem Sensor (14) zur Ermittlung von Schwingungen des Stützelementes (5), des Mantels (6) oder der Achse (4), **dadurch gekennzeichnet, dass** Schwingungen gemessen und anhand des Ergebnisses wenigstens ein Schaltventil (10) in einem Bypass (9) zwischen dem Versorgungsraum (3) und dem Druckraum (7) angesteuert werden.

9. Verfahren gemäß Anspruch 8, **dadurch gekennzeichnet, dass** das Schaltventil (10) mit einer Schaltfrequenz von 100 bis 2000 Hz, vorzugsweise 200 bis 1500 Hz, angesteuert wird.

10. Verfahren gemäß Anspruch 8 oder 9, **dadurch gekennzeichnet, dass** über das Schaltventil (10) ein gemittelter Volumenstrom von 0,1 bis 4 l/min pulsiert.

11. Verfahren gemäß einem der Ansprüche 8 bis 10, **dadurch gekennzeichnet, dass** in einer elektronischen Steuerung (2) Messergebnisse von Drehzahl- und/oder Weg- und/oder Beschleunigungssignalen des wenigstens einen Sensors (14) analysiert werden und das Schaltventil (10) aufgrund der Auswertung angesteuert wird.
